# EUROPÄISCHE PATENTSCHRIFT

(11) **EP 0 542 042 B1**
(45) Veröffentlichungstag und Bekanntmachung des Hinweises auf die Patenterteilung: **27.12.1995**
(21) Anmeldenummer: 92118446.1
(22) Anmeldetag: 28.10.1992
(51) Int. Cl.: G01M 3/20, G01M 3/26, E02D 31/00

(54) **Überwachbare Einrichtung und Verfahren zum Überwachen einer Einrichtung zum Abdichten eines Körpers**
Procedure and device for monitoring the space between two sealing elements
Procédé et dispositif de surveillance de l'espace entre deux éléments de scellement

(30) Priorität: 14.11.1991 DE 4137473
(43) Veröffentlichungstag der Anmeldung: 19.05.1993
(73) Patentinhaber: SIEMENS AKTIENGESELLSCHAFT, 80333 München (DE)
(72) Erfinder: Ruthrof, Klaus, Dipl.-Ing. (FH), W-8500 Nürnberg (DE); Jax, Peter, Dr., W-8520 Erlangen (DE); Bode, Karl-Heinz, W-8000 München 21 (DE); Günther, Klaus, Dr., W-2000 Hamburg 76 (DE)

(56) Entgegenhaltungen:
- DE-U- 9 107 693
- US-A- 3 842 659
- US-A- 4 796 676

## Beschreibung

Die Erfindung betrifft eine überwachbare Einrichtung zum Abdichten eines Körpers, insbesondere einer Mülldeponie, mit zwei voneinander beabstandeten Abdichtungen, zwischen denen sich ein Kontrollraum befindet, der bis auf Anschlüsse wie eine Eintrittsöffnung und eine Austrittsöffnung für ein Transportmedium geschlossen ist, wobei im Kontrollraum die Eintrittsöffnung mit der Austrittsöffnung durch einen permeablen Kanal oder Schlauch verbunden ist und wobei an die Austrittsöffnung ein Sensor für einen zu überwachenden Stoff angeschlossen ist. Die Erfindung betrifft auch ein Verfahren zum Überwachen einer solchen Einrichtung zum Abdichten eines Körpers.

Aus dem deutschen Gebrauchsmuster G 91 07 693.5 ist ein Element zum Abdichten und Überwachen eines Körpers, insbesondere einer Abfalldeponie, bekannt. Dieses Element besteht aus zwei beabstandeten Abdichtungen. Zwischen diesen Abdichtungen befindet sich ein permeabler Kanal oder Schlauch mit einer endseitigen Eintrittsöffnung und einer endseitigen Austrittsöffnung für ein Transportmedium. Unter Freilassung dieser Öffnungen sind die beiden Abdichtungen an ihren Rändern dicht miteinander verbunden. In die Eintrittsöffnung wird in vorgegebenen Zeitabständen ein Transportmedium eingespeist. Die Austrittsöffnung ist mit einem Sensor verbunden. Sollte eine der beiden Abdichtungen ein Leck aufweisen, gelangt in der Regel von außen ein Stoff, z.B. ein Schadstoff, in den Kanal oder Schlauch. Mit dem Transportmedium wird dieser Stoff zum Sensor transportiert, der den Stoff registriert. Vom Zeitpunkt des Eintreffens des Stoffes am Sensor läßt sich bei bekannter Strömungsgeschwindigkeit des Transportmediums auf den Leckageort schließen.

Zur Leckortung wird dabei von einem Leckortungssystem Gebrauch gemacht, das z.B. aus der DE-PS 24 31 907 bekannt ist.

Mit der bekannten Einrichtung läßt sich ein Leck in einer der beiden Abdichtungen leicht erkennen, wenn durch das Leck von außen ein Stoff eindringt, der ein Gas ist. Es muß dann nur ein geeigneter Gassensor eingesetzt werden. Falls der zu überwachende Stoff eine Flüssigkeit, insbesondere Wasser oder eine wässrige Lösung ist, gestaltet sich die Bestimmung des Leckortes schwierig. Damit die eingedrungene Flüssigkeit im Transportmedium erkannt werden kann, ist es nämlich notwendig, daß das Transportmedium weitgehend trocken ist. Falls das Transportmedium mit Wasser gesättigt wäre, könnte durch ein Leck eingedrungenes Wasser selbst durch einen geeigneten Wassersensor nicht registriert werden. Wenn der Kontrollraum aber weitgehend trocken ist, bedeutet das Eindringen selbst einer kleinen Wassermenge eine deutliche lokal begrenzte Änderung des Wassergehaltes im Kontrollraum. Diese Wassermenge kann dann mit dem Transportmedium zum Sensor gebracht werden. Da das Transportmedium in regelmässigen Abständen eingespeist wird, läßt sich aus dem Zeitpunkt des Eintreffens des Wassers am Sensor auf den Leckageort schließen.

Einen trockenen Kontrollraum aufrechtzuerhalten, ist technisch aufwendig. Es müssen im Kontrollraum Trockenmittel eingesetzt werden, die sogar Feuchtigkeit aus dem Transportmedium aufnehmen. Sollte der Kontrollraum zur mechanischen Stabilität ein gas- und flüssigkeitsdurchlässiges Medium enthalten, muß auch dieses Medium trocken gehalten werden.

Der Erfindung liegt die Aufgabe zugrunde, eine auf Lecks überwachbare Einrichtung zum Abdichten eines Körpers, insbesondere einer Mülldeponie, anzugeben, die kein Trockenmittel benötigt und auch sonst nicht trockengehalten werden muß und die trotzdem das Eindringen einer Flüssigkeit durch ein Leck zu erkennen und zu detektieren gestattet. Es soll auch ein Verfahren zum Überwachen einer solchen Abdichteinrichtung angegeben werden, mit dem ohne Einsatz von Trockenmittel speziell Lecks, durch die Wasser eindringt, lokalisiert werden können.

Die erste genannte Aufgabe wird gemäß der Erfindung dadurch gelöst, daß bei einer Einrichtung der eingangs genannten Art eine Lanze zum Zuführen von Tracergas vorgesehen ist, die außerhalb des Kontrollraums einer der Abdichtungen zugewandt angeordnet werden kann, und daß der Sensor zum Nachweis des Tracergases ausgebildet ist.

Falls ein Leck in einer der Abdichtungen vermutet wird, wird das Tracergas über die Lanze von außen an die Abdichtung herangebracht. Das Tracergas, das ein beliebiges, leicht zu detektierendes Gas sein kann, gelangt dann über das vorhandene Leck in den Kontrollraum und von dort in den permeablen Kanal oder Schlauch. Da der erwähnte Sensor vorhanden ist, der sensibel für das Tracergas ist, läßt sich mittels einer in Abständen erfolgenden Einspeisung von Transportmedium in den Kontrollraum anhand des Zeitpunktes, in dem das Tracergas am Sensor ankommt, der Leckageort bestimmen. Bei der Ausbreitung des Tracergases im Kontrollraum stört dort vorhandene Feuchtigkeit nicht. Es kann also dort stets eine Flüssigkeitsmenge vorhanden sein.

Beispielsweise ist im Kontrollraum ein Füllstandsmesser für Flüssigkeit angeordnet.

Der Kontrollraum kann feucht oder trocken sein. Falls nach Auftreten eines Lecks in einer der Abdichtungen Flüssigkeit von außen in den Kontrollraum eindringt, ergibt sich dort eine Zunahme der Flüssigkeitsmenge. Diese Zunahme wird mit dem als solchen bekannten Füllstandsmesser erkannt. Der Füllstandsmesser ist dazu in der Regel am tiefsten Punkt der Einrichtung angeordnet, weil sich dort zunächst die Flüssigkeit ansammelt. Mit dem Füllstandsmesser allein kann noch nicht der genaue Ort des Lecks bestimmt werden. Der Füllstandsmesser gibt nur einen Hinweis darauf ab, daß das Leck vorhanden ist. Wenn auf diese Weise die Existenz des Lecks feststeht, wird außerhalb des Kontrollraums die Lanze eingesetzt.

Mit der Einrichtung gemäß der Erfindung wird der Vorteil erzielt, daß das Eindringen von Flüssigkeit durch ein Leck in einer Abdichtung leicht zu lokalisieren ist, ohne daß der Kontrollraum zwischen den Abdichtungen ständig trocken gehalten zu werden braucht. Man spart so aufwendige Mittel zur fortwährenden Trocknung des Kontrollraums und des Transportmediums.

Die zweite genannte Aufgabe wird gemäß der Erfindung dadurch gelöst, daß bei einem Verfahren der eingangs genannten Art eine der Abdichtungen mit Tracergas beaufschlagt wird und daß an der Austrittsöffnung das Tracergas überwacht und die Leckstelle daraus bestimmt wird.

Mit dem Einsatz des Tracergases wird nach Erkennen des Lecks ein leicht zu detektierendes Medium als Tracergas in die Nähe des Lecks gebracht. Das Tracergas muß nicht ständig an der Abdichtung zugegen sein. Auch ist es nicht notwendig, den Kontrollraum ständig trocken zu halten, falls der Stoff, der durch ein Leck in den Kontrollraum eindringen könnte, eine Flüssigkeit ist.

Beispielsweise wird im Kontrollraum der Flüssigkeitsstand gemessen und es wird in Abhängigkeit vom Füllstand oder vom Erreichen eines vorgegebenen Füllstands eine der Abdichtungen mit Tracergas beaufschlagt.

Mit diesem Verfahren wird zunächst nur die Existenz eines Lecks, durch das eine Flüssigkeit eindringt, festgestellt.

Zur genauen Ortung des Lecks mit Hilfe eines Leckortungsverfahrens wird dann die gesamte Einrichtung, die das Leck aufweist, mit Tracergas beaufschlagt, das sogar in einem sehr feuchten Kontrollraum über den Kanal oder Schlauch durch das Transportmedium bis zum Sensor gebracht werden kann.

Es wird vorteilhafterweise ein zuverlässiges und einfaches Verfahren sowie eine geeignete Einrichtung zur Verfügung gestellt.

Wenn die Einrichtung zum Abdichten des Körpers (Mülldeponie) aus mehreren gegeneinander abgeschotteten Segmenten besteht, braucht nur dasjenige Segment mit dem Tracergas beaufschlagt zu werden, in dem durch den Füllstandsmesser ein Anstieg des Füllstandes bestimmt worden ist.

Die Einrichtung und das Verfahren gemäß der Erfindung werden anhand der Zeichnung näher erläutert:
Figur 1 zeigt eine Einrichtung zum Abdichten eines Körpers mit Mitteln zur Lecküberwachung und -ortung im Querschnitt.
Figur 2 zeigt eine seitliche Ansicht der Einrichtung mit weiteren Einzelheiten.

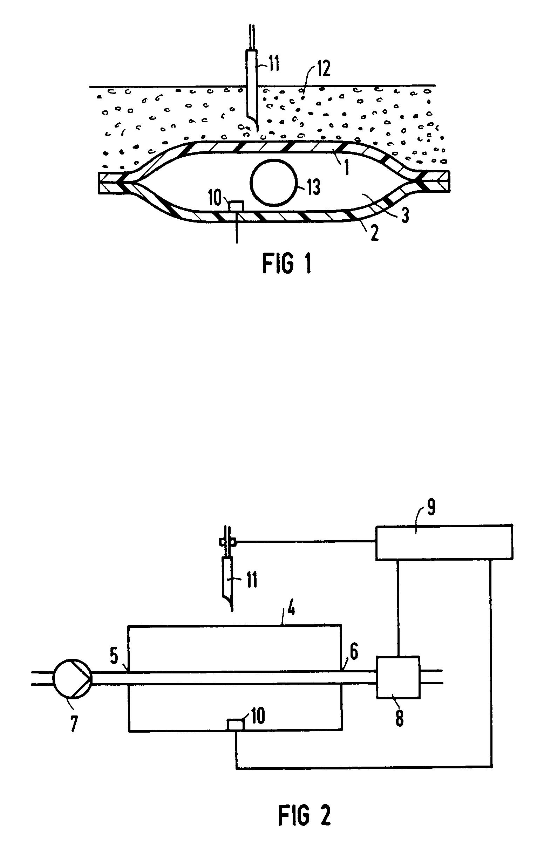

Nach Figur 1 umfaßt die Einrichtung zum Abdichten eines Körpers K, insbesondere einer Mülldeponie, zwei voneinander beabstandete Abdichtungen 1 und 2, die am Rand miteinander fest verbunden sind. Zwischen den beiden Abdichtungen 1 und 2, die Kunststoff-Folien sein können, befindet sich ein Kontrollraum 3, in dem ein permeabler Kanal oder Schlauch 13 angeordnet oder verlegt ist. Der Schlauch 13 kann mäanderförmig verlegt sein.

In Figur 2 ist ein Element 4 aus zwei Abdichtungen 1 und 2 und einem Kontrollraum 3 mit Schlauch 13 gezeigt. Mehrere solche Elemente 4 können aneinandergefügt werden. Das Element 4 weist eine Eintrittsöffnung 5 und eine Austrittsöffnung 6 auf, die durch den Kanal oder Schlauch 13 miteinander verbunden sind. Der Eintrittsöffnung 5 ist eine steuerbare Pumpe 7 zum gesteuerten Einspeisen eines Transportmediums zugeordnet. Mit der Austrittsöffnung 6 ist ein Sensor 8 verbunden. Dieser steht mit einer Auswerteeinheit 9 in Verbindung.

Um zu erkennen, ob durch ein Leck in der Abdichtung 1 oder 2 Flüssigkeit in den Kontrollraum 3 gelangt ist, ist dort, z.B. am tiefsten Punkt, ein Füllstandsmesser 10 angeordnet. Dieser steht mit der Auswerteeinheit 9 in Verbindung. Wenn durch ein Leck in der Abdichtung 1 oder 2 Flüssigkeit in den Kontrollraum 3 eindringt, wird dies durch den Füllstandsmesser 10 erkannt, der ein Signal abgibt. Um den Ort des Lecks bestimmen zu können, wird, nachdem in der Auswerteeinheit 9 das Signal des Füllstandsmessers 10 angekommen ist, eine Lanze 11 aktiviert, durch die ein Tracergas in die Nähe der Abdichtung 1 oder 2 gebracht wird. Dieses Tracergas gelangt dann durch das Leck in der Abdichtung 1 oder 2 in den Kontrollraum 3 und von dort in den Kanal oder Schlauch 13. Dort wird es mit dem Transportmedium zum Sensor 8 gebracht, der für das Tracergas empfindlich ist. Aus dem Zeitpunkt des Eintreffens des Tracergases 2 am Sensor 8 wird in der Auswerteeinheit 9 der Leckageort in der Abdichtung 1 oder 2 bestimmt.

Die Lanze 11 kann ständig oberhalb der Abdichtung 1 oder unterhalb der Abdichtung 2 installiert sein; sie wird dann nur bei Bedarf mit dem Tracergas beaufschlagt. Sie kann dazu mit der Auswerteeinheit 9 verbunden sein. Die Lanze 11 kann aber auch nur im Bedarfsfalle positioniert werden. Da in der Regel oberhalb der Abdichtung 1 eine Materialschicht 12, z.B. aus Kies, vorhanden ist (Figur 1), wird die Lanze 11 in diese Materialschicht 12 eingeführt. Das Tracergas breitet sich dann innerhalb dieser Materialschicht 12 an der Abdichtung 1 entlang aus und gelangt auf diese Weise zu einem möglichen Leck. Wenn die Existenz eines Lecks durch den Füllstandsmesser 10 erkannt worden ist, wird der Leckageort mittels des Tracergases bestimmt.

## Patentansprüche

1. Überwachbare Einrichtung zum Abdichten eines Körpers (K), insbesondere einer Mülldeponie, mit zwei voneinander beabstandeten Abdichtungen (1, 2), zwischen denen sich ein Kontrollraum (3) befindet, der bis auf Anschlüsse für eine Eintrittsöffnung (5) und eine Austrittsöffnung (6) für ein Transportmedium geschlossen ist, wobei im Kontrollraum (3) die Eintrittsöffnung (5) mit der Austrittsöffnung (6) durch einen permeablen Kanal oder Schlauch (13) verbunden ist und wobei an die Austrittsöffnung (6) ein Sensor (8) für einen zu überwachenden Stoff angeschlossen ist,
**dadurch gekennzeichnet,** daß eine Lanze (11) zum Zuführen von Tracergas vorhanden ist, die außerhalb des Kontrollraums (3) einer der Abdichtungen (1, 2) zugewandt angeordnet werden kann, und
daß der Sensor (8) zum Nachweis des Tracergases ausgebildet ist.

2. Überwachbare Einrichtung nach Anspruch 1,
**dadurch gekennzeichnet,** daß im Kontrollraum (3) ein Füllstandsmesser (10) für Flüssigkeit angeordnet ist.

3. Verfahren zum Überwachen einer Einrichtung zum Abdichten eines Körpers (K), insbesondere einer Mülldeponie, wobei die Einrichtung zwei voneinander beabstandete Abdichtungen (1, 2) aufweist, zwischen denen sich ein Kontrollraum (3) befindet, der bis auf Anschlüsse wie eine Eintrittsöffnung (5) und eine Austrittsöffnung (6) für ein Transportmedium geschlossen ist, wobei im Kontrollraum (3) die Eintrittsöffnung (5) mit der Austrittsöffnung (6) durch einen permeablen Kanal oder Schlauch (13) verbunden ist und wobei an der Austrittsöffnung (6) das Auftreten eines Stoffes überwacht wird,
**dadurch gekennzeichnet,** daß eine der Abdichtungen (1, 2) mit Tracergas beaufschlagt wird und
daß an der Austrittsöffnung (6) das Tracergas überwacht und die Leckstelle daraus bestimmt wird.

4. Verfahren nach Anspruch 3,
**dadurch gekennzeichnet,** daß im Kontrollraum (3) der Flüssigkeitsstand gemessen wird und daß in Abhängigkeit vom Füllstand oder vom Erreichen eines vorgegebenen Füllstands eine der Abdichtungen (1, 2) mit Tracergas beaufschlagt wird.

## Claims

1. A monitorable device for sealing off a body (K), in particular a rubbish dump, having two mutually spaced-apart seals (1, 2) defining a control chamber (3) therebetween which is closed except for connections for an inlet opening (5) and an outlet opening (6) for a transport medium, the inlet opening (5) communicating with the outlet opening (6) in the control chamber (3) through a permeable channel or hose (13), and a sensor (8) being connected to the outlet opening (6) for a substance to be monitored, characterised in that a lance (11) is provided for supplying tracer gas, which lance can be arranged outside the control chamber (3) facing one of the seals (1, 2), and the sensor (8) is constructed for detecting the tracer gas.

2. A monitorable device according to claim 1, characterised in that a level gauge (10) for liquid is arranged in the control chamber (3).

3. A method for monitoring a device for sealing off a body (K), in particular a rubbish dump, having two mutually spaced-apart seals (1, 2) defining a control chamber (3) therebetween which is closed except for connections such as an inlet opening (5) and an outlet opening (6) for a transport medium, the inlet opening (5) communicating with the outlet opening (6) in the control chamber (3) through a permeable channel or hose (13), and the presence of a substance being monitored at the outlet opening (6), characterised in that one of the seals (1, 2) is acted upon by tracer gas, the tracer gas is monitored at the outlet opening (6) and the leakage site determined.

4. A method according to claim 3, characterised in that the liquid level in the control chamber (3) is measured and one of the seals (1, 2) is acted upon by tracer gas as a function of the liquid level or when a predetermined liquid level is reached.

## Revendications

1. Dispositif pouvant être surveillé pour rendre étanche un corps (K), notamment un dépôt de déchets, comprenant deux éléments de scellement (1, 2) situés à distance l'un de l'autre, entre lesquels se trouve un espace de contrôle (3) qui, à l'exception de raccords pour une ouverture d'entrée (5) et une ouverture de sortie (6) pour un milieu de transport, est fermé, l'ouverture d'entrée (5) étant reliée à l'ouverture de sortie (6), dans l'espace de contrôle (3), par un canal ou tuyau (13) perméable et un capteur (8) pour une matière à surveiller étant annexé à l'ouverture de sortie (6), caractérisé en ce que l'on trouve une lance (11) servant à amener un gaz traceur qui peut être située du côté de l'un des éléments de scellement (1, 2), à l'extérieur de l'espace de contrôle (3), et en ce que le capteur (8) est conçu pour mettre en évidence le gaz traceur.

2. Dispositif pouvant être surveillé selon la revendication 1, caractérisé en ce qu'un appareil de mesure du niveau (10) d'un liquide est situé dans l'espace de contrôle (3).

3. Procédé pour surveiller un dispositif pour rendre étanche un corps (K), notamment un dépôt de déchets, le dispositif comprenant deux éléments de scellement (1, 2) situés à distance l'un de l'autre, entre lesquels se trouve un espace de contrôle (3) qui, à l'exception de raccords tels qu'une ouverture d'entrée (5) et une ouverture de sortie (6) pour un milieu de transport, est fermé, l'ouverture d'entrée (5) étant reliée à l'ouverture de sortie (6), dans l'espace de contrôle (3), par un canal ou tuyau (13) perméable et l'apparition d'une matière étant surveillée au niveau de l'ouverture de sortie (6), caractérisé en ce que l'on envoie du gaz traceur sur l'un des éléments de scellement (1, 2) et en ce que le gaz traceur est surveillé au niveau de l'ouverture de sortie (6) et le lieu de la fuite déterminé à partir de cela.

4. Procédé selon la revendication 3, caractérisé en ce que le niveau de liquide est mesuré dans l'espace de contrôle (3) et que, en fonction du niveau de remplissage ou selon que l'on atteint un niveau de remplissage prédéterminé, on envoie du gaz traceur sur l'un des éléments de scellement (1, 2).
